# EUROPEAN PATENT APPLICATION

(11) **EP 4 414 205 A1**
(43) Date of publication of application: **14.08.2024**
(21) Application number: 22878507.7
(22) Date of filing: 04.10.2022
(51) Int. Cl.: B60L 15/20

(54) **VEHICLE CONTROL DEVICE**

(30) Priority: 05.10.2021 JP 2021163850
(71) Applicant: HINO MOTORS, LTD., Hino-shi, Tokyo 191-8660 (JP)
(72) Inventor: YAMANE Takayuki, Hino-shi, Tokyo 191-8660 (JP); UEDA Naoki, Hino-shi, Tokyo 191-8660 (JP)
(74) Representative: D Young & Co LLP
(86) International application number: PCT/JP2022/037087
(87) International publication number: WO 2023/058639

(57) **Abstract**

A vehicle control device configured to control an automobile traveling with an electric motor as a power source includes a control unit configured to control the electric motor. When a torque of the electric motor decreases from a region on a positive side of the torque in a direction in which the torque of the electric motor accelerates the automobile to a region on a negative side of the torque in a direction in which the torque of the electric motor decelerates the automobile, the control unit controls the electric motor so that a torque rate in the region on the negative side of the torque is smaller than a torque rate in the region on the positive side of the torque, the torque rate being a change rate of the torque per unit time.

## Description

### Technical Field

One aspect of the present invention relates to a vehicle control device.

### Background Art

A technique for controlling an automobile traveling with an electric motor as a power source has been proposed. For example, Patent Literature 1 discloses a technique for calculating an instruction torque in which an instruction torque for following the target torque of an electric motor is brought close to 0 in an inertia traveling mode in which inertia traveling is performed, and after the instruction torque approaches 0, a change amount per time of the instruction torque is made smaller than that in a normal traveling mode.

### Citation List

### Patent Literature

Patent Literature 1: Japanese Unexamined Patent Publication No. 2021-115866

### Summary of Invention

### Technical Problem

In the meantime, in the technique as described above, when a driver of the automobile performs a deceleration operation, responsiveness may deteriorate such that the driver still feels the acceleration of the automobile. In the above-described technique, when the driver of the automobile performs the deceleration operation, impact may occur due to an early rise of deceleration.

Therefore, an object of one aspect of the present invention is to provide a vehicle control device capable of achieving both securing of responsiveness and reduction of impact.

### Solution to Problem

One aspect of the present invention is a vehicle control device configured to control an automobile traveling with an electric motor as a power source, the vehicle control device including a control unit configured to control the electric motor, wherein when a torque of the electric motor decreases from a region on a positive side of the torque in a direction in which the torque of the electric motor accelerates the automobile to a region on a negative side of the torque in a direction in which the torque of the electric motor decelerates the automobile, the control unit controls the electric motor so that a torque rate in the region on the negative side of the torque is smaller than a torque rate in the region on the positive side of the torque, the torque rate being a change rate of the torque per unit time.

According to this configuration, the vehicle control device configured to control the automobile traveling with the electric motor as the power source includes the control unit configured to control the electric motor, wherein when the torque of the electric motor decreases from the region on the positive side of the torque in the direction in which the torque of the electric motor accelerates the automobile to the region on the negative side of the torque in a direction in which the torque of the electric motor decelerates the automobile, the control unit controls the electric motor so that the torque rate in the region on the negative side of the torque is smaller than the torque rate in the region on the positive side of the torque, the torque rate being the change rate of the torque per unit time. Since the torque rate in the region on the positive side of the torque is relatively large, it is possible to reduce deterioration of responsiveness in which a driver of the automobile still feels the acceleration of the automobile when the driver performs a deceleration operation. Meanwhile, since the torque rate in the region on the negative side of the torque is relatively small, it is possible to reduce impact caused by an early rise of deceleration when the driver of the automobile performs the deceleration operation. Therefore, both ensuring of responsiveness and reduction of impact can be achieved.

In this case, the control unit suitably controls the electric motor so that the torque rate decreases as the torque approaches 0 in the region on the positive side of the torque when the torque of the electric motor decreases from the region on the positive side of the torque to the region on the negative side of the torque, and the torque rate increases as the torque approaches 0 in the region on the negative side of the torque.

According to this configuration, the control unit controls the electric motor so that the torque rate is relatively large in the region on the positive side of the torque, but decreases as the torque approaches 0 when the torque of the electric motor decreases from the region on the positive side of the torque to the region on the negative side of the torque, and the torque rate is relatively small in the region on the negative side of the torque, but increases as the torque approaches 0. Therefore, when the torque is near 0, which is the boundary between the region on the positive side of the torque and the region on the negative side of the torque, the fluctuation of the torque rate becomes smooth, and the influence on the behavior of the automobile can be reduced.

### Advantageous Effects of Invention

A vehicle control device of one aspect of the present invention can achieve both securing of responsiveness and reduction of impact.

### Brief Description of Drawings

FIG. 1 is a block diagram illustrating an automobile including a vehicle control device according to an embodiment.
FIG. 2(A) is a graph illustrating a change in the speed of a conventional automobile, FIG. 2(B) is a graph illustrating a change in the torque of an electric motor for changing the speed in FIG. 2(A), FIG. 2(C) is a graph illustrating a change in the speed of an automobile by a vehicle control device according to an embodiment, and FIG. 2(D) is a graph illustrating a change in the torque of an electric motor for changing the speed in FIG. 2(C).
FIG. 3(A) is a diagram illustrating a map for setting the torque rate of a conventional electric motor, and FIG. 3(B) is a diagram illustrating a map for setting the torque rate of an electric motor according to the present embodiment.
FIG. 4 is a graph illustrating a relationship between a torque and a torque rate by the vehicle control device according to the embodiment.

### Description of Embodiments

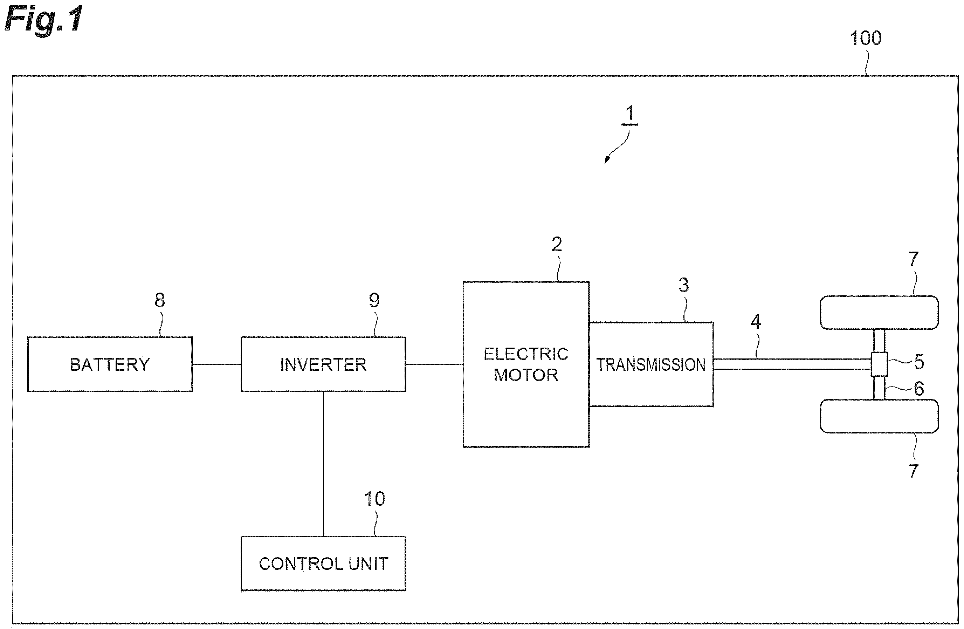

Hereinafter, a vehicle control device according to an embodiment of one aspect of the present invention will be described in detail with reference to the drawings. As illustrated in FIG. 1, a vehicle control device 1 of the present embodiment is mounted on an automobile 100 and controls the automobile 100 traveling using an electric motor 2 as a power source. The automobile 100 is, for example, a hybrid electric vehicle (HEV), a plug-in hybrid electric vehicle (PHEV), a fuel cell electric vehicle (FCEV), or a battery electric vehicle (BEV) or the like, and is a large vehicle such as a bus or a truck. That is, the automobile 100 may include an internal combustion engine or the like as a power source in addition to the electric motor 2.

The vehicle control device 1 includes a control unit 10 configured to control the electric motor 2. The electric motor 2 is, for example, a permanent magnet synchronous motor, and can also generate power. An output shaft of the electric motor 2 is connected to an input shaft of a transmission 3. An output shaft of the transmission 3 is connected to left and right drive wheels 7 via a propeller shaft 4, a differential device 5, and a drive shaft 6. Note that, in a case where the electric motor 2 is an in-wheel motor incorporated in the drive wheel 7, the transmission 3, the propeller shaft 4, the differential device 5, and the drive shaft 6 may be omitted. The automobile 100 includes a battery 8 for supplying electric power to the electric motor 2. The battery 8 supplies electric power to the electric motor 2 via an inverter 9. The inverter 9 generates a control signal for rotationally driving the electric motor 2 on the basis of a command signal from the control unit 10.

The control unit 10 includes an electronic control unit (ECU). The ECU is an electronic control unit including a central processing unit (CPU), a read only memory (ROM), a random access memory (RAM), and the like. The ECU loads, for example, a program recorded in the ROM into the RAM, and causes the CPU to execute the program loaded into the RAM, thereby implementing various functions. The ECU may include a plurality of electronic units.

When the torque of the electric motor 2 decreases from a region on a positive side of the torque in a direction in which the torque of the electric motor 2 accelerates the automobile 100 to a region on a negative side of the torque in a direction in which the torque of the electric motor 2 decelerates the automobile 100, the control unit 10 controls a torque rate as a change rate of the torque per unit time.

When the torque of the electric motor 2 decreases from the region on the positive side of the torque to the region on the negative side of the torque, for example, accelerator-off regeneration or retarder regeneration is performed. In the accelerator-off regeneration, when an accelerator pedal is turned off, the electric motor 2 is rotated by the rotational force of the drive wheel 7 of the inertia-traveling automobile 100, to cause the electric motor 2 to generate electric power. In the accelerator-off regeneration, the kinetic energy of the automobile 100 is converted into electric energy, to change the battery 8. In the retarder regeneration, a conventional retarder is assumed, and the torque (regenerative torque) of the electric motor 2 is controlled according to the number of stages of an operation lever to assist the braking of the automobile 100 at the time of deceleration.

The vehicle control device 1 of the present embodiment may be applied when the torque of the electric motor 2 decreases from the region on the positive side of the torque to the region on the negative side of the torque in a system in which the powering torque and regenerative torque of the electric motor 2 are controlled only by the operation of the accelerator pedal in the acceleration and deceleration of the automobile 100. In this system, acceleration and deceleration (regeneration) are performed following the opening degree of the accelerator pedal.

In this system, for example, when the accelerator pedal is stepped and turned on, the electric motor 2 generates the powering torque (torque in the positive region). Meanwhile, in this system, when the accelerator pedal is not stepped and is turned off, the electric motor 2 generates the regenerative torque (torque in the negative region). In this system, the regenerative region is enlarged, and the regenerative torque can be obtained without waste at the time of deceleration. In this system, even when the accelerator pedal is turned on, the electric motor 2 may generate the regenerative torque in the region on the negative side when the stepping amount of the accelerator pedal is small, and the electric motor 2 may generate the regenerative torque in the region on the negative side when the accelerator pedal is turned off. That is, in this system, control including the positive side and negative side of the torque is performed according to the stepping amount of the accelerator pedal.

Hereinafter, the operation of the vehicle control device 1 of the present embodiment will be described. Conventionally, a torque rate [Nm/s], which is a change rate in the torque per unit time, is set in order to ensure drivability such as the suppression of the occurrence of impact due to a sudden change in the torque of the electric motor 2. Conventionally, the torque rate is set by the following method in consideration of a factor having a large influence on drivability with respect to a change in the torque of the electric motor 2.

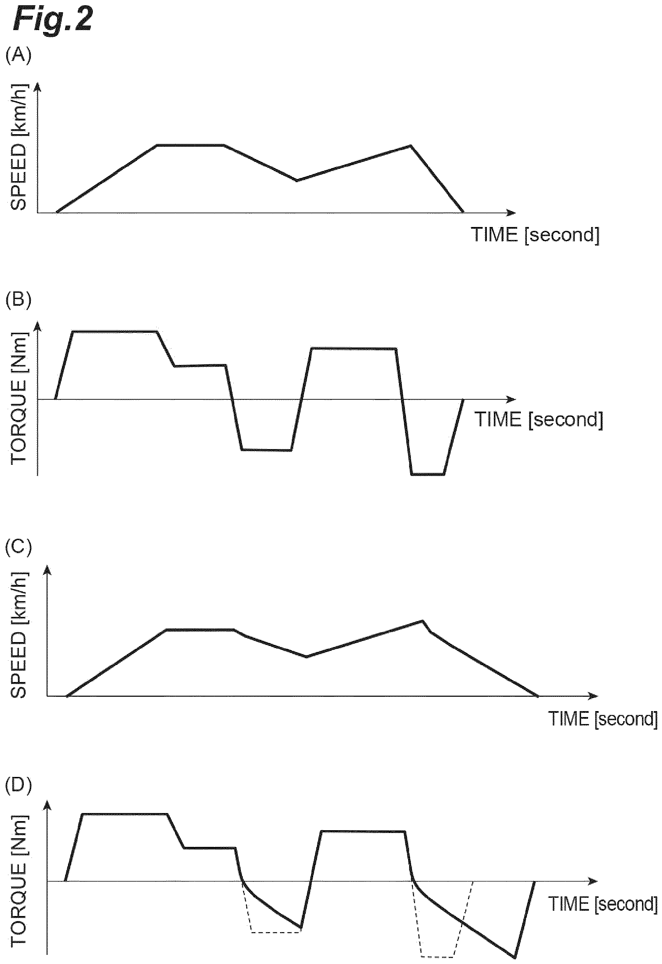

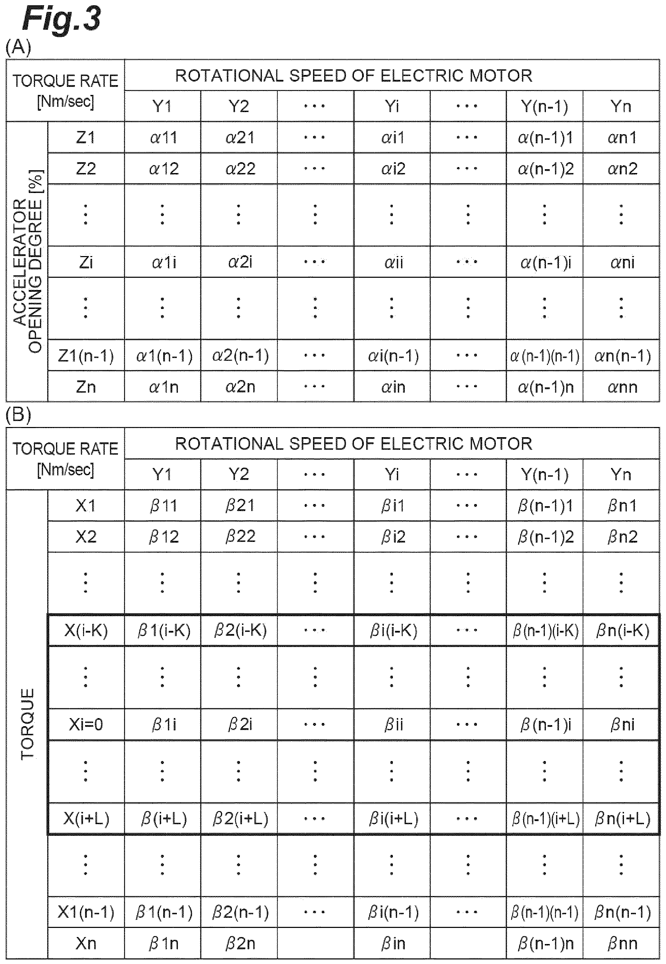

Conventionally, when the speed of the automobile 100 is controlled as illustrated in FIG. 2(A), the torque rate is set based on, for example, the accelerator opening degree (stepping amount of accelerator pedal) [%] and the rotational speed of the electric motor 2 as illustrated in FIG. 3(A). Conventionally, the torque rate is set based on the transmission gear ratio (gear number) of the transmission 3 and the rotational speed of the electric motor 2. In FIG. 3(A), Y1 < Y2 < ... < Yi < ... < Y(n-1) < Yn and Z1 < Z2 < ... < Zi < ... < Z(n-1) < Zn are satisfied (n and i are arbitrary natural numbers, and 1 < i < n is satisfied).

Conventionally, as illustrated in the gradient of the graph of FIG. 2(B), when the torque of the electric motor 2 decreases from the region on the positive side of the torque to the region on the negative side of the torque, the torque rate is constant, and the torque rate in the region on the positive side of the torque is equal to the torque rate in the region on the negative side of the torque. For example, in FIG. 3(A), for the accelerator opening degrees Z1, Z2, ..., Zi, ..., Z(n-1), and Zn with respect to the rotational speed Yi of the electric motor 2, the torque rates (αi1, αi2, ..., αii, ..., αi(n-1), and αin are set to be constant as αi1 = αi2 = ... = αii = ... = αi(n-1) = αin.

However, in such torque rate setting, priority is given to making a rise of deceleration in the region on the negative side of the torque gentle, and when a small torque rate is set, the driver still feels the acceleration of the automobile 100 from on to off of the accelerator pedal. That is, the responsiveness is deteriorated. Meanwhile, when a large torque rate is set with priority given to reduction of the feeling that the driver still feels acceleration when the accelerator pedal is turned off on the positive side of the torque, the deceleration rises quickly, and impact is generated. For example, there is a possibility that deterioration of ride comfort, an influence on passengers, and an influence on luggage occur.

A disadvantage of the conventional torque rate setting method is that it is impossible to clearly distinguish between the positive side (acceleration side) of the torque and the negative side (deceleration side) of the torque due to the relationship of the item of the axis of the map of the torque rate being set. Therefore, in the present embodiment, the following two points are performed.
(1) Change in axis item of map of torque rate
(2) Optimization of torque rate value

As a change in the axis item of the torque rate map of (1), in the present embodiment, as illustrated by boldface in FIG. 3(B), by changing the axis item of the torque rate map to the rotational speed and the torque of the electric motor 2, it is possible to clearly separate the positive side of the torque from the negative side of the torque. In FIG. 3(B), X1 < X2 < ... < X(i-K) < ... < Xi < ... < X(i+L) < ... < X(n-1) < Xn is satisfied (n, i, K, and L are arbitrary natural numbers, and 1 < i < n, 1 < K < i-1, and 1 < L < n-i are satisfied). Xi = 0 is satisfied. X1 < X2 < ... < X(i-K) < ... < Xi is in the region on the negative side of the torque, and Xi < ... < X(i+L) < ... < X(n-1) < Xn is in the region on the positive side of the torque.

As the optimization of the torque rate value in (2), in the present embodiment, as illustrated in FIGS. 2(C), 2(D), and 3(B), when the torque of the electric motor 2 decreases from the region on the positive side of the torque to the region on the negative side of the torque, the control unit 10 controls the electric motor 2 so that the torque rate in the region on the negative side of the torque is smaller than the torque rate in the region on the positive side of the torque. For example, in the example of FIG. 2(D), when the torque of the electric motor 2 decreases from the region on the positive side of the torque to the region on the negative side of the torque, the torque rate represented by the gradient of the graph is smaller in the region on the negative side of the torque than in the region on the positive side of the torque. That is, the gradient of the graph is gentle.

For example, in FIG. 3(B), the torque rates βi1, βi2, ..., βi(i-K), ..., βii, ..., βi(i+L), ... βi(n-1), and βin for the torques X1, X2, ..., X(i-K), ..., Xi, ..., X(i+L), ..., X(n-1), and Xn with respect to the rotational speed Yi of the electric motor 2 are such that the torque rates βi1, βi2, ..., and βi(i-K) in the regions Xi > .... > X(i-K) > ... > X2 > X1 on the negative side of the torque are smaller than the torque rates βi(i+L), ..., βi(n-1), and βin in the regions Xi < ... <X(i+L) < ... < X(n-1) < Xn on the positive side of the torque.

The torque rates βi1, βi2, ..., βi(i-K), ..., βii, ..., βi(i+L), ... βi(n-1), and βin for the torques X1, X2, ..., X(i-K), ..., Xi, ..., X(i+L), ..., X(n-1), and Xn with respect to the rotational speed Yi of the electric motor 2 satisfy βi1 ≤ βi2 ≤ ... ≤ βi(i-K) ≤ ... ≤ βii ≤ ... ≤ βi(i+L) ≤ ... ≤ βi(n-1) ≤ βin, and the torque rate decreases as the torque decreases. In X1, X2, ..., X(i-K), ..., Xi, ..., X(i+L), ..., X(n-1), and Xn, which are torque regions, the torque rate may decrease as a whole with respect to the decrease in the torque, and there may be a region where the torque rate is constant with respect to the decrease in the torque in part.

In the present embodiment, furthermore, the control unit 10 controls the electric motor 2 so that the torque rate decreases as the torque approaches 0 in the region on the positive side of the torque when the torque of the electric motor 2 decreases from the region on the positive side of the torque to the region on the negative side of the torque, and the torque rate increases as the torque approaches 0 in the region on the negative side of the torque. As illustrated in a portion surrounded by a thick line in FIGS. 2(D) and 3(B), the torque rate decreases as the torque approaches 0 in the regions Xi < ... < X(i+L) on the positive side of the torque, and the torque rate increases as the torque approaches 0 in the regions Xi > ... > X(i-K) on the negative side of the torque. The fluctuation of the torque rate when the torque is near 0 is reduced.

In FIG. 3(B), in the regions Xi < ... < X(i+L) on the positive side of the torque, βii ≤ βi(i+1) ≤ βi(i+2) ≤ ... ≤ βi(i+(L-1)) ≤ Xi(i+L) is satisfied, and the torque rate decreases as the torque approaches 0. In the regions Xi < ... < X(i+L) on the positive side of the torque, it is sufficient that the torque rate decreases as the torque approaches 0 as a whole, and there may be a region where the torque rate is constant with respect to the decrease of the torque in part. In the regions Xi > ... > X(i-K) on the negative side of the torque, βii ≥ βi(i-1) ≥ βi(i-2) ≥ ... > βi(i-(K-1)) ≥ βi(i-K) is satisfied, and the torque rate increases as the torque approaches 0. In the regions Xi > ... > X(i-K) on the negative side of the torque, it is sufficient that the torque rate increases as the torque approaches 0 as a whole, and there may be a region where the torque rate is constant with respect to the increase of the torque in part.

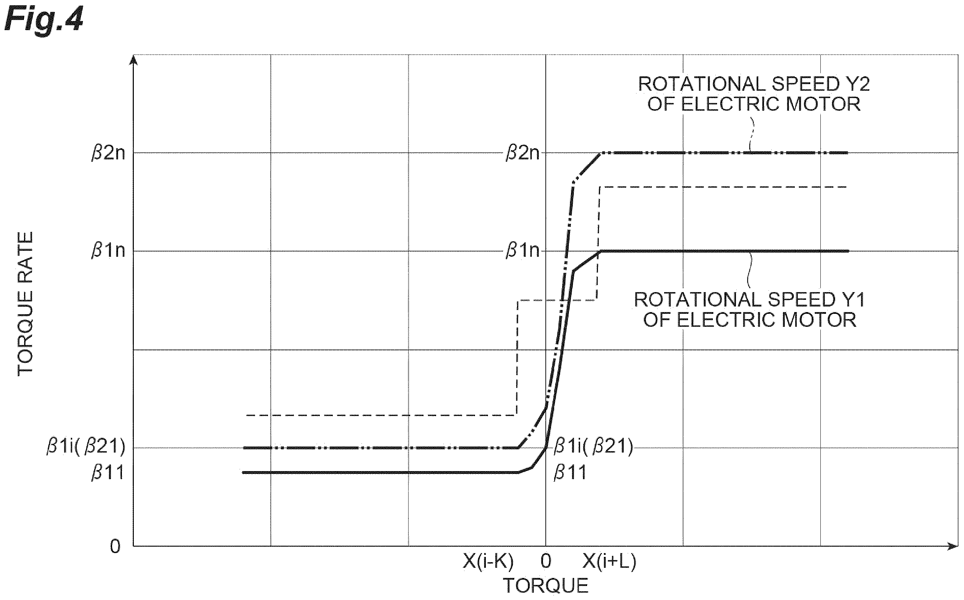

Therefore, in the present embodiment, when the torque is near 0, the control unit 10 controls the electric motor 2 according to the graph as illustrated in FIG. 4. In the example of FIG. 4, β1i which is a torque rate when the torque is 0 in the case where the rotational speed of the electric motor is Y1 is equal to β21 which is a torque rate when the torque is the minimum value on the negative side in the case where the rotational speed of the electric motor is Y2. However, this is an example, and the torque rate can take any value.

In the examples of FIGS. 3(B) and 4, when the torque of the electric motor 2 decreases from the region on the positive side of the torque to the region on the negative side of the torque, the control unit 10 controls the electric motor 2 so that the torque rate in the region on the negative side of the torque is smaller than the torque rate in the region on the positive side of the torque. However, in the region of X(i-K) < ... < Xi < ... < X(i+L) including the case where the torque is 0, as indicated by a broken line in FIG. 4, the torque rate in the region on the positive side of the torque is equal to the torque rate in the region on the negative side of the torque, and the torque rate may fluctuate stepwise.

That is, a case where the torque rate in the region on the negative side of the torque is smaller than the torque rate in the region on the positive side of the torque includes a case where the torque rate in the region on the positive side of the torque is equal to the torque rate in the region on the negative side of the torque in arbitrary regions of X(i-K) < ... < Xi < ... < X(i+L) including a case where the torque is 0.

As a basic idea, in the present embodiment, when the torque of the electric motor 2 decreases from the region on the positive side of the torque to the region on the negative side of the torque, an intermediate layer in which the torque rate fluctuates from a large value to a small value is as close as possible to a portion where the torque of the electric motor 2 is 0 [Nm]. As a result, it is possible to suppress the driver from having a feeling of the acceleration of the automobile and impact. As a whole, the torque rate in the region on the negative side of the torque can be determined from the viewpoint of preventing the falling of the standing passenger, for example, in a case where the automobile 100 is a bus, and can be determined from the viewpoint of preventing the collapse of cargo in a case where the automobile 100 is a truck.

In the present embodiment, the vehicle control device 1 configured to control the automobile 100 traveling with the electric motor 2 as the power source includes the control unit 10 configured to control the electric motor 2, wherein when the torque of the electric motor 2 decreases from the region on the positive side of the torque in the direction in which the torque of the electric motor 2 accelerates the automobile 100 to the region on the negative side of the torque in the direction in which the torque of the electric motor 2 decelerates the automobile 100, the control unit 10 controls the electric motor 2 so that the torque rate in the region on the negative side of the torque is smaller than the torque rate in the region on the positive side of the torque, the torque rate being the change rate of the torque per unit time.

Since the torque rate in the region on the positive side of the torque is relatively large, it is possible to reduce deterioration of responsiveness in which the driver of the automobile 100 still feels the acceleration of the automobile 100 when the driver performs a deceleration operation. Meanwhile, since the torque rate in the region on the negative side of the torque is relatively small, it is possible to reduce impact caused by an early rise of deceleration when the driver of the automobile 100 performs a deceleration operation. Therefore, both ensuring of responsiveness and reduction of impact can be achieved. By ensuring the responsiveness, drivability can be improved.

In the present embodiment, the control unit 10 controls the electric motor 2 so that the torque rate is relatively large in the region on the positive side of the torque, but decreases as the torque approaches 0 when the torque of the electric motor 2 decreases from the region on the positive side of the torque to the region on the negative side of the torque, and the torque rate is relatively small in the region on the negative side of the torque, but increases as the torque approaches 0. Therefore, when the torque is near 0, which is the boundary between the region on the positive side of the torque and the region on the negative side of the torque, the fluctuation of the torque rate becomes smooth, and the influence on the behavior of the automobile 100 can be reduced.

Although the embodiment of one aspect of the present invention has been described above, one aspect of the present invention is not limited to the above embodiment and is implemented in various forms.

### Reference Signs List

- 1: vehicle control device
- 2: electric motor
- 3: transmission
- 4: propeller shaft
- 5: differential device
- 6: drive shaft
- 7: drive wheel
- 8: battery
- 9: inverter
- 10: control unit
- 100: automobile

## Claims

1. A vehicle control device configured to control an automobile traveling with an electric motor as a power source, the vehicle control device comprising
a control unit configured to control the electric motor,
wherein when a torque of the electric motor decreases from a region on a positive side of the torque in a direction in which the torque of the electric motor accelerates the automobile to a region on a negative side of the torque in a direction in which the torque of the electric motor decelerates the automobile,
the control unit controls the electric motor so that a torque rate in the region on the negative side of the torque is smaller than the torque rate in the region on the positive side of the torque, the torque rate being a change rate of the torque per unit time.

2. The vehicle control device according to claim 1, wherein
when the torque of the electric motor decreases from the region on the positive side of the torque to the region on the negative side of the torque,
the control unit controls the electric motor so that
the torque rate decreases as the torque approaches 0 in the region on the positive side of the torque, and
the torque rate increases as the torque approaches 0 in the region on the negative side of the torque.
